# EUROPEAN PATENT APPLICATION

(11) **EP 4 631 915 A1**
(43) Date of publication of application: **15.10.2025**
(21) Application number: 25162891.3
(22) Date of filing: 11.03.2025
(51) Int. Cl.: C01G 53/50, H01M 4/525

(54) **POSITIVE ELECTRODE ACTIVE MATERIALS, PREPARATION METHODS OF POSITIVE ELECTRODE ACTIVE MATERIALS, POSITIVE ELECTRODES, AND RECHARGEABLE LITHIUM BATTERIES**

(30) Priority: 11.03.2024 KR 20240034109
(71) Applicant: SAMSUNG SDI CO., LTD., Yongin-si, Gyeonggi-do 17084 (KR)
(72) Inventor: JUN, Dowook, 17084 Yongin-si (KR); KIM, Young-Ki, 17084 Yongin-si (KR); KONG, Youngsun, 17084 Yongin-si (KR); CHOO, Sung Ho, 17084 Yongin-si (KR); KANG, Seok Mun, 17084 Yongin-si (KR); YOON, Jaesang, 17084 Yongin-si (KR); DOO, Sungwook, 17084 Yongin-si (KR); KANG, Gwiwoon, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

Provided are a positive electrode active material, and a method of preparing the positive electrode active material, and a positive electrode including the positive electrode active material, and a rechargeable lithium battery including the positive electrode active material. The positive electrode active material comprises core particles including a lithium nickel-based composite oxide and a coating layer provided on the surfaces of the core particles, with the coating layer including aluminium, yttrium, and tungsten.

## Description

### BACKGROUND

### 1. Field

Positive electrode active materials, preparation methods of positive electrode active materials, positive electrodes including the positive electrode active materials, and rechargeable lithium batteries are disclosed.

### 2. Description of the Related Art

With the rapid spread of electronic devices that use batteries, such as mobile phones, laptop computers, and electric vehicles, the demand for rechargeable batteries with high energy density and high capacity is increasing. Accordingly, research and development to improve the performance of rechargeable lithium batteries is actively underway.

A rechargeable lithium battery includes a positive electrode and a negative electrode including an active material capable of intercalating and deintercalating lithium ions, and an electrolyte solution. Electrical energy is produced through oxidation and reduction reactions when lithium ions are intercalated/deintercalated from the positive electrode and negative electrode.

Various materials have been examined as positive electrode active materials for such rechargeable lithium batteries. Among them, lithium nickel-based oxide, lithium nickel manganese cobalt composite oxide, lithium nickel cobalt aluminium composite oxide, and lithium cobalt oxide are mainly used as positive electrode active materials. However, while the demand for large-sized, high-capacity, or high-energy-density rechargeable lithium batteries has recently increased, the supply of a positive electrode active material including cobalt, a rare metal, is expected to be severely short in the future. Also, because cobalt is expensive and there are not many remaining reserves, it is necessary to reduce the cobalt content or develop a positive electrode active material that does not include cobalt.

### SUMMARY

Some embodiments provide a positive electrode active material including a lithium nickel-based composite oxide, which has high capacity, long cycle-life characteristics, improved high-voltage, and high-temperature characteristics, and can be produced with less costs. Embodiments also include a method for preparing the positive electrode active material, a positive electrode including the positive electrode active material, and a rechargeable lithium battery including the positive electrode active material.

In some embodiments, a positive electrode active material includes core particles including a lithium nickel-based composite oxide; and a coating layer provided on the surfaces of the core particles, with the coating layer including aluminium, yttrium, and tungsten.

In some embodiments, a method of preparing a positive electrode active material includes mixing a nickel-based composite hydroxide and a lithium raw material; performing a first heat treatment on the nickel-based composite hydroxide and lithium raw material mixture to obtain a first composite oxide; adding the first composite oxide to a solution of aluminium raw material and yttrium raw material in an aqueous solvent, mixing, and then drying; and dry-mixing the dried resulting materials and a tungsten raw material and performing a second heat treatment to obtain the positive electrode active material.

In some embodiments, a positive electrode includes a current collector, and a positive electrode active material layer on the current collector, wherein the positive electrode active material layer includes the positive electrode active material described herein.

In some embodiments, a rechargeable lithium battery including the positive electrode, a negative electrode, and an electrolyte is provided.

At least some of the above and other features of the invention are set out in the claims.

The positive electrode active material according to some embodiments maximizes capacity while minimizing production cost, ensures long cycle-life, and improves high-voltage characteristics and high-temperature characteristics. When the positive electrode active material is applied to a rechargeable lithium battery, high initial charge/discharge capacity and efficiency may be achieved under high-voltage operating conditions, long cycle-life characteristics may be realized, and gas generation due to the high-voltage and high-temperature operation may be effectively suppressed.

### BRIEF DESCRIPTION OF THE DRAWINGS

FIGS. 1 to 4 are schematic views showing rechargeable lithium batteries according to some embodiments.
FIGS. 5 and 6 are scanning electron microscopy (SEM) images of the surface of the positive electrode active material particle of Comparative Example 1.
FIGS. 7 and 8 are SEM images of the surface of the positive electrode active material particles of Comparative Example 2.
FIGS. 9 and 10 are SEM images of the surface of the positive electrode active material particle of Comparative Example 6.
FIGS. 11 and 12 are SEM images of the surface of the positive electrode active material particle of Example 2.
FIGS. 13 and 14 are SEM images of the surface of the positive electrode active material particles of Example 3.
FIG. 15 is an image taken in back-scattered electron (BSE) mode of SEM for the positive electrode active material prepared in Example 4.
FIG. 16 shows the results of scanning electron microscopy/energy-dispersive X-ray spectrometry (SEM-EDS) analysis of the surface of the first positive electrode active material, which is a portion of the particles of the positive electrode active material prepared in Example 4.
FIG. 17 shows the results of SEM-EDS analysis of the cross-section of the first positive electrode active material, which is a portion of the particles of the positive electrode active material prepared in Example 4.
FIG. 18 shows the results of SEM-EDS analysis of the surface of the second positive electrode active material, which is a portion of the particles of the positive electrode active material prepared in Example 4.
FIG. 19 shows the results of SEM-EDS analysis of the cross-section of the second positive electrode active material, which is a portion of the particles of the positive electrode active material prepared in Example 4.

### DETAILED DESCRIPTION

Embodiments of the present disclosure will be described in detail. However, the present disclosure is not limited to the expressly disclosed embodiments.

As used herein, when specific definition is not otherwise provided, it will be understood that when an element such as a layer, film, region, or substrate is referred to as being "on" another element, it can be directly on the other element or intervening elements may also be present.

As used herein, when specific definition is not otherwise provided, the singular may also include the plural. In addition, unless otherwise specified, "A or B" may mean "including A, including B, or including A and B."

As used herein, "combination thereof" means a mixture, a laminate, a composite, a copolymer, an alloy, a blend, a reaction product, and the like of the constituents.

As used herein, when a definition is not otherwise provided, a particle diameter may be an average particle diameter. In addition, the particle diameter refers to the average particle diameter (D₅₀), which refers to a diameter of particles with a cumulative volume of volume% in the particle size distribution. The average particle diameter (D₅₀) can be measured by methods well known to those skilled in the art, for example, by measuring with a particle size analyzer, a transmission electron microscope or scanning electron microscope, or a scanning electron microscope. Alternatively, a dynamic light-scattering measurement device is used to perform a data analysis, and the number of particles is counted for each particle size range. From this, the average particle diameter (D₅₀) value may be easily obtained through a calculation. A laser diffraction method may also be used. When measuring by laser diffraction, more specifically, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle size (D₅₀) based on 50% of the particle size distribution in the measuring device can be calculated.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In addition, "layer" herein includes not only a shape formed on the whole surface when viewed from a plan view, but also a shape formed on a partial surface.

"Metal" is interpreted as a concept including ordinary metals, transition metals and metalloids (semi-metals).

### Positive Electrode Active Material

In some embodiments, a positive electrode active material includes core particles including a lithium nickel-based composite oxide; and a coating layer located on the surfaces of the core particles and including aluminium, yttrium, and tungsten.

Recently, LiCoO₂(LCO), LiNiₓCo_{y}Mn_{z}O₂ (NCM), LiNiₓCo_{y}Al_{z}O₂ (NCA), etc. have been used as positive electrode active materials for rechargeable lithium batteries. However, as the price of cobalt rises worldwide, there is a need to reduce the cobalt content or develop a positive electrode active material excluding cobalt. Among such materials a positive electrode active material having an olivine crystal structure such as lithium iron phosphate (LFP), lithium manganese phosphate (LMP), lithium manganese iron phosphate (LMFP), and the like or a spinel crystal structure such as lithium manganese oxide (LMO) and the like has a limitation with respect to high capacity due to a small available lithium amount within the structure.

A layered lithium nickel-manganese positive electrode active material has excellent capacity and efficiency characteristics due to the high available lithium capacity in the structure, making it suitable as a material for high-capacity batteries. However, as cobalt, which plays a key role in the layered structure, is removed, structural stability decreases, resistance increases, and it becomes difficult to secure long cycle-life characteristics. In addition, the layered lithium nickel-manganese positive electrode active material, from which cobalt is excluded, may have a problem of accelerated side reactions with an electrolyte under high-voltage and high-temperature conditions, which may result in increased gas generation and deteriorated cycle-life characteristics.

Accordingly, in some embodiments, a positive electrode active material is proposed in which a lithium nickel-based composite oxide is used as core particles and a coating layer including aluminium, yttrium, and tungsten is formed on the core particles. With this structure, the cobalt content required for core particles can be lowered or excluded to ensure structural stability, thereby providing cost competitiveness. In addition, by including aluminium, yttrium, and tungsten in the coating layer, the capacity and efficiency of the battery can be maximized and the amount of gas generation can be reduced even under high-voltage or high-temperature conditions to thereby achieve long cycle-life characteristics.

### Core Particles

The core particles include a lithium nickel-based composite oxide. As an example, the lithium nickel-based composite oxide may be represented by Chemical Formula 1.

[Chemical Formula 1] Liₐ₁Niₓ₁M¹_{y1}M²_{z1}O_{2-b1}X_{b1}

In Chemical Formula 1, 0.9≤a1≤1.8, 0.3≤x1≤0.98, 0≤y1≤0.7, 0≤z1≤0.7, 0.9≤x1+y1+z1≤1.1, and 0≤b1≤0.1, M¹ and M² are each independently Al, B, Ba, Ca, Ce, Co, Cr, Fe, Mg, Mn, Mo, Nb, Si, Sn, Sr, Ti, V, Y, W, Zr, or a combination thereof, and X is F, P, S, or a combination thereof.

In Chemical Formula 1, for example, 0.9≤a1≤1.5 or 0.9≤a1≤1.2. In addition, for example, 0.35≤x1≤0.95, 0.4≤x1≤0.9, 0.45≤x1≤0.85, 0.5≤x1≤0.8, or 0.69≤x1≤0.79; 0.1≤y1≤0.65, 0.1≤y1≤0.60, 0.1≤y1≤0.55, 0.15≤y1≤0.5, or 0.2≤y1≤0.4; and 0.01<z1≤0.5, 0.01<z1≤0.3, or 0.01<z1≤0.1.

In some embodiments, the lithium nickel-based composite oxide may be a lithium nickel-manganese-based composite oxide or a lithium nickel-manganese-aluminium-based composite oxide. Additionally, the lithium nickel-based composite oxide may have a layered structure.

The lithium nickel-manganese-based composite oxide may be represented by Chemical Formula 2.

[Chemical Formula 2] Liₐ₂Niₓ₂Mn_{y2}M¹z₂M²_{w2}O_{2-b2}X_{b2}

In Chemical Formula 2, 0.9≤a2≤1.8, 0.6≤x2≤0.8, 0.1≤y2≤0.39, 0.01<z2≤0.03, 0≤w2≤0.29, 0.9≤x2+y2+z2+w2≤1.1, and 0≤b2≤0.1, M¹ and M² are each independently Al, B, Ba, Ca, Ce, Cr, Fe, Mg, Mo, Nb, Si, Sn, Sr, Ti, V, Y, W, Zr, or a combination thereof, and X is F, P, S, or a combination thereof.

In Chemical Formula 2, for example, 0.9≤a2≤1.5, or 0.9≤a2≤1.2. In addition, for example, 0.6≤x2≤0.79, 0.6≤x2≤0.78, 0.6≤x2≤0.75, 0.65≤x2≤0.8, or 0.7≤x2≤0.79; 0.1≤y2≤0.35, 0.1≤y2≤0.30, 0.1≤y2≤0.29, 0.15≤y2≤0.39, or 0.2≤y2≤0.3; 0.01<z2≤0.025, 0.01<z2≤0.02, or 0.01<z2≤0.019; and 0≤w2≤0.28, 0≤w2≤0.27, 0≤w2≤0.26, 0≤w2≤0.25, 0≤w2≤0.24, 0≤w2≤0.23, 0≤w2≤0.22, 0≤w2≤0.21, 0≤w2≤0.2, 0≤w2≤0.15, 0≤w2≤0.1, or 0≤w2≤0.09.

The lithium nickel-manganese-aluminium-based composite oxide may be represented by Chemical Formula 3.

[Chemical Formula 3] Liₐ₃Niₓ₃Mn_{y3}Al_{z3}M¹_{w3}O_{2-b3}X_{b3}

In Chemical Formula 3, 0.9≤a3≤1.8, 0.6≤x3≤0.8, 0.1≤y3≤0.39, 0.01<z3≤0.03, 0≤w3≤0.29, 0.9≤x3+y3+z3+w3≤1.1, and 0≤b3≤0.1, M¹ is B, Ba, Ca, Ce, Cr, Fe, Mg, Mo, Nb, Si, Sn, Sr, Ti, V, Y, W, Zr, or a combination thereof, and X is F, P, S, or a combination thereof.

In Chemical Formula 3, for example, 0.9≤a3≤1.5, or 0.9≤a3≤1.2. In addition, for example, 0.6≤x3≤0.79, 0.6≤x3≤0.78, 0.6≤x3≤0.75, 0.65≤x3≤0.8, or 0.7≤x3≤0.79; 0.1≤y3≤0.35, 0.1≤y3≤0.30, 0.1≤y3≤0.29, 0.15≤y3≤0.39, or 0.2≤y3≤0.3; 0.01<z3≤0.025, 0.01<z3≤0.02, or 0.01<z3≤0.019; and 0≤w3≤0.28, 0≤w3≤0.27, 0≤w3≤0.26, 0≤w3≤0.25, 0≤w3≤0.24, 0≤w3≤0.23, 0≤w3≤0.22, 0≤w3≤0.21, 0≤w3≤0.2, 0≤w3≤0.15, 0≤w3≤0.1, or 0≤w3≤0.09.

A nickel content may be greater than or equal to about 60 mol% based on 100 mol% of a total metal content of the positive electrode active material excluding lithium. The nickel is included in the core particles, but the nickel may move to some of the coating layers during the coating process. Accordingly, the nickel content may refer to a nickel content included in the entire positive electrode active material (core particles and coating layers). The nickel content may be may be, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal content the positive electrode active material excluding lithium. If the nickel content satisfies these ranges, high capacity may be achieved and structural stability may be ensured even if the cobalt content is reduced.

A manganese content may be, for example, about 10 mol% to about 39 mol%, about 10 mol% to about 35 mol%, about 10 mol% to about 30 mol%, about 10 mol% to about 29 mol%, about 15 mol% to about 39 mol%, about 20 mol% to about 39 mol%, or about 20 mol% to about 30%, based on 100 mol% of a total metal content of the positive electrode active material excluding lithium. The manganese is included in the core particles, but the manganese may move to some of the coating layers during the coating process. Accordingly, the manganese content may refer to a manganese content included in the entire positive electrode active material (core particles and coating layers). If the manganese content satisfies these ranges, the positive electrode active material may have structural stability while realizing high capacity.

An aluminium content in the core particles may be greater than or equal to about 0.1 mol%, greater than or equal to about 0.5 mol%, or greater than or equal to about 1 mol%, and less than or equal to about 3 mol%, less than or equal to about 2 mol%, or less than or equal to about 1.9 mol%, based on 100 mol% of a total metal content of the positive electrode active material excluding lithium. Herein, the aluminium content refers to the content of aluminium present in the core particles. If the aluminium content of the core particles satisfies these ranges, a stable layered structure may be achieved even if cobalt is excluded from the core particles, the problem of structure collapse due to charging and discharging may be suppressed, and long cycle-life characteristics of the positive electrode active material may be realized.

According to some embodiments, a concentration of aluminium within the core particles may be relatively uniform. In other words, there is no concentration gradient of aluminium from the centers to the surfaces of the core particles, nor is an aluminium concentration on the outsides of the core particles higher or lower than on the insides of the core particles, and that the aluminium within the core particles is evenly distributed. This structure may be obtained by synthesizing a composite oxide using nickel-manganese-aluminium hydroxide as a precursor without additional doping of aluminium during the synthesis of the core particles. The core particles may be in the form of secondary particles in which a plurality of primary particles are agglomerated, and the aluminium content inside the primary particles may be the same or similar regardless of the location of the primary particles. That is, if a primary particle is selected at a random position in the cross-section of a secondary particle and the aluminium content is measured inside the primary particle rather than at its interface, regardless of the location of the primary particle, that is, whether the primary particle is close to the center of the secondary particle or close to the surface, the aluminium content may be the same/similar/uniform. In this structure, a stable layered structure can be achieved even if cobalt is absent or is present in a very small amount, and aluminium by-products or aluminium aggregates are not generated, such that the capacity, efficiency, and cycle-life characteristics of the positive electrode active material can be improved at the same time.

The lithium nickel-manganese-aluminium-based composite oxide of the core particles may be a cobalt-free compound that does not include cobalt or includes a very small amount of cobalt.

The core particles may be in the form of secondary particles formed by agglomerating a plurality of primary particles. The secondary particles may be spherical, elliptical, polyhedral, or irregularly shaped, and the primary particles may be spherical, elliptical, plate-shaped, or a combination thereof.

The core particles may be susceptible to chemical attack from components in the electrolyte when the battery is operated under high voltage or high temperature conditions, and side reactions with the electrolyte may occur. Accordingly, there may be a problem that gas generation increases, battery cycle-life decreases, and the battery may be less safe. These problems can be solved by introducing a coating layer according to some embodiments.

### Coating Layer

The positive electrode active material includes a coating layer provided on the surfaces of the core particles, with the coating layer including aluminium, yttrium, and tungsten. In embodiments, aluminium, yttrium, and tungsten are all included in the coating layer. With such a structure, the amount of gas generation under high-voltage or high-temperature driving conditions can be significantly reduced as compared to cases where only one or two of aluminium, yttrium, and tungsten are included.

The coating layer according to some embodiments may be in the form of a film that continuously surrounds the surfaces of the core particles or may be present as island shapes on the surfaces of the core particles.

As an example, the coating layer may be in a form of a film that continuously surrounds the surface of the core particle. The coating layer film may be in a form of a shell surrounding the entire surface of the core particle, which is different from a structure in which only a portion of the surface of the core particle is coated. The coating layer can be formed to entirely cover the surface of the core particle and be very thin and relatively uniform in thickness. Accordingly, the structural stability of the positive electrode active material can be improved without increasing resistance or decreasing capacity. In addition, side reactions with the electrolyte can be effectively suppressed, the amount of gas generation under high-voltage and high-temperature conditions can be reduced, and long cycle-life characteristics can be realized.

The aluminium content of the coating layer may be about 0.1 mol% to about 2.5 mol%, for example, the aluminium content may be about 0.2 mol% to about 2.3 mol%, about 0.3 mol% to about 2.0 mol%, about 0.5 mol% to about 2.0 mol%, about 0.8 mol% to about 2.0 mol%, or about 0.8 mol% to about 1.3 mol%, based on 100 mol% of a total metal content of the positive electrode active material excluding lithium. These ranges refer only to a content of aluminium included in the coating layers, separately from the aluminium included in the core particles. The aluminium content of the coating layer can be measured, for example, through SEM-EDS analysis of the surface or cross-section of the positive electrode active material. If the aluminium content satisfies the ranges, a uniform and thin coating layer thickness may be formed, and side reactions with an electrolyte maybe effectively suppressed without increasing resistance, thereby, improving cycle-life characteristics of a rechargeable lithium battery under high-voltage and high-temperature conditions.

The yttrium content of the coating layer may be about 0.05 mol% to about 1.5 mol%, for example, the yttrium content may be about 0.1 mol% to about 1.5 mol%, about 0.1 mol% to about 1.3 mol%, about 0.1 mol% to about 1.2 mol%, about 0.1 mol% to about 1.0 mol%, or about 0.1 mol% to about 0.6 mol%, based on 100 mol% of a total metal content of the positive electrode active material excluding lithium. If the yttrium content of the coating layer is in these ranges, the positive electrode active material forms a good coating layer without reducing capacity or increasing resistance, effectively suppressing side reactions with the electrolyte, and effectively reducing gas generation under high-voltage or high-temperature conditions.

The tungsten content of the coating layer may be about 0.01 mol% to about 1.5 mol%, for example, about 0.02 mol% to about 1.3 mol%, about 0.03 mol% to about 1.2 mol%, about 0.04 mol% to about 1.0 mol%, about 0.05 mol% to about 0.3 mol%, or about 0.1 mol% to about 0.2 mol%, based on 100 mol% of a total metal content of the positive electrode active material excluding lithium. If the tungsten content in the coating layer satisfies these ranges, the structural stability of the positive electrode active material can be improved, and side reactions with the electrolyte can be effectively suppressed. Thus, it is possible to reduce an amount of gas generated from rechargeable lithium batteries under high-voltage and high-temperature conditions.

According to some embodiments, the positive electrode active material is obtained through heat treatment at a high temperature of greater than or equal to about 800 °C and an oxygen atmosphere during the preparing process. Thus aluminium, yttrium, and tungsten may be present in a form of oxides in the coating layer. For example, the coating layer may include metal oxides including metal selected from aluminium, yttrium, tungsten, or a combination thereof. In some embodiments, the coating layer includes aluminium oxide, yttrium oxide, and tungsten oxide, and/or may include a composite oxide including two or more elements selected from aluminium, yttrium and tungsten. The oxide of the metal in the coating layer may further include lithium. In some embodiments, the aluminium in the coating layer may be present as aluminium oxide (Al₂O₃, etc.) or lithium aluminium oxide (LiAlO₂, LiAl₅O₈, Li₅AlO₄, etc.), the yttrium may be present as yttrium oxide (Y₂O₃) or lithium yttrium oxide (LiYO₂, etc.), and the tungsten may be present as tungsten oxide (WO₃) or lithium tungsten oxide (Li₂WO₄, etc.). With such configurations, cycle-life characteristics of rechargeable lithium batteries may be improved and an amount of gas generation under high-voltage and high-temperature conditions may be reduced. The presence of aluminium, yttrium, and tungsten in the form of oxides in the coating layer can be confirmed using elemental analysis through EDS analysis or SEM-EDS analysis, or by measuring with high-resolution transmission electron microscopy (HR-TEM) and using crystal structure analysis through Fourier transformation.

A molar ratio (C_{W}/C_{Y}) of a tungsten content (C_{W}) to an yttrium content (C_{Y}) of the coating layer may be less than or equal to about 1.0, for example, about 0.01 to about 1.0, about 0.05 to about 1.0, about 0.1 to about 1.0, or about 0.25 to about 1.0. With such configurations, the positive electrode active material forms a good coating layer without reducing capacity or increasing resistance, effectively suppressing side reactions with the electrolyte, and effectively reducing the amount of gas generation under high-voltage and high-temperature conditions.

As another example, a molar ratio (C_{W}/C_{Al}) of a tungsten content (C_{W}) to an aluminium content (C_{Al}) of the coating layer may be less than or equal to about 0.5, for example, about 0.01 to about 0.5, about 0.03 to about 0.5, or about 0.05 to about 0.5. In such configurations, the positive electrode active material may be structurally stable and form a good coating layer without reducing capacity or increasing resistance, effectively suppressing side reactions with the electrolyte, and effectively reducing the amount of gas generation under high-voltage and high-temperature conditions.

A thickness of the coating layer may be about 30 nm to about 1 µm, for example, about 50 nm to about 1 µm, about 80 nm to about 800 nm, or about 100 nm to about 500 nm. If the coating layer is in these thickness ranges, the structural stability of the positive electrode active material may be improved without increasing resistance or reducing capacity due to the coating, and side reactions with the electrolyte may be effectively suppressed. The thickness of the coating layer can be measured, for example, through time-of-flight secondary ion mass spectrometry (TOF-SIMS), x-ray photoelectron spectroscopy (XPS), or energy dispersive x-ray spectroscopy (EDS) analysis, and the thickness range of the coating layer is measured through SEM-EDS or transmission electron microscopy energy dispersive spectroscopy (TEM-EDS) line profile.

In some embodiments, aluminium, yttrium, and tungsten may be mixed in the coating layer.

According to some embodiments, aluminium in the coating layer may be present in the form of a continuous film or in the form of an island.

According to some embodiments, one or more of aluminium, yttrium, and tungsten may be present in an island shape in the coating layer. For example, one or more of yttrium and tungsten may be present in an island shape in the coating layer. With such configurations, the structural stability of the positive electrode active material may be improved, gas generation can be reduced even under high-voltage and high-temperature conditions, and long cycle-life characteristics can be effectively implemented.

As further example, the aluminium in the coating layer may be present in a form of a continuous film or in the shape of an island, and one or more of yttrium and tungsten may be present in the shape of an island, but the present disclosure is not limited in this regard. The island shape may have a thickness ranging from about 10 nm to about 500 nm. In such a case, the structural stability of the positive electrode active material can be improved, gas generation can be reduced even under high-voltage and high-temperature conditions, and long cycle-life characteristics can be effectively implemented. The size and thickness of the island shape may be measured, for example, through component analysis using SEM-EDS on the cross-section of the positive electrode active material.

The positive electrode active material may be of two types: a first positive electrode active material in which an yttrium coating is prominently present in the coating layer, and a second positive electrode active material in which a tungsten coating is prominently present. With the two types of positive electrode active materials both being present, reduction of gas generation and long cycle-life characteristics can be achieved even under high-voltage and high-temperature conditions.

As an example embodiment, the positive electrode active material may include a first positive electrode active material including yttrium in an island shape, a second positive electrode active material including tungsten in an island shape, or a combination of the first positive electrode active material and the second positive electrode active material. For example, the positive electrode active material may include a first positive electrode active material in which yttrium is present in an island shape and a second positive electrode active material in which tungsten is present in an island shape, and the size of the yttrium-containing island shape in the first positive electrode active material may be smaller than the size of the tungsten-containing island shape in the second positive electrode active material. With such a configuration, gas generation can be reduced and long cycle-life characteristics can be realized even under high-voltage and high-temperature conditions.

The coating layer may further include nickel, manganese, or a combination thereof in addition to aluminium, yttrium, and tungsten. The nickel and manganese may be initially included in the core particles and may be introduced during the coating layer formation process, and their contents are not particularly limited. The coating layer according to some embodiments essentially includes aluminium, yttrium, and tungsten, while optionally including nickel and manganese, and the coating layer may be thin and uniform in thickness. With such a coating layer, high-voltage characteristics and cycle-life characteristics of the positive electrode active material may be improved.

### Grain Boundary Coating Portion

During the coating layer formation process, aluminium may diffuse into the core particles. Accordingly, the positive electrode active material according to some embodiments may further include a grain boundary coating portion including aluminium on the surface of primary particles inside the secondary particles. Herein, the secondary particle refers to the core particle, and the inside of the secondary particles may refer to the entire inside excluding the surface of the secondary particles or a region to about 60% of the length in a center direction of the secondary particles from the surface of the secondary particles. The grain boundary coating portion is distinguished from the coating layer on the core particle surface and refers to a coating portion on the surface of the primary particles inside the core particles. The grain boundary coating portion may be confirmed through SEM-EDS analysis of a cross-section of the positive electrode active material. The aluminium grain boundary coating portion may further structurally stabilize the positive electrode active material and improve cycle-life characteristics.

An aluminium content in the grain boundary coating portion is not particularly limited but may be less than an aluminium content in the coating layer.

Additionally, the grain boundary coating portion may further include nickel, manganese, or a combination of nickel and manganese in addition to aluminium.

### Internal Pores

In some embodiments, pores may be formed inside the core particles of the positive electrode active material. Thus, during the process of forming the coating layer, tungsten may diffuse into the core particles, and, as a result, tungsten may be further included in the internal pores of the core particles.

An average particle diameter (D₅₀) of the positive electrode active material according to some embodiments is not particularly limited, but may be, for example, about 10 µm to about 18 µm, about 11 µm to about 16 µm, or about 12 µm to about 15 µm. The average particle diameter may mean a diameter (D₅₀) of particles having a cumulative volume of 50 volume% in the particle size distribution that is obtained by measuring the size (diameter or major axis length) of about 20 particles at random in a scanning electron microscope image for positive electrode active materials. If the average particle diameter of the positive electrode active material satisfies these ranges, a coating layer can be formed that is advantageous in terms of high capacity and long cycle-life.

In the positive electrode active material according to some embodiments, a cobalt content may be less than or equal to about 0.01 mol%, less than or equal to about 0.005 mol%, less than or equal to about 0.001 mol%, for example, about 0 mol% to about 0.01 mol%, based on 100 mol% of the total metal content of the positive electrode active material excluding lithium. The positive electrode active material according to some embodiments may be, for example, a cobalt-free positive electrode active material.

Additionally, in some embodiments, the positive electrode active material may not include sodium. In general, sodium ions can be used in the preparing process of a positive electrode active material. But, according to the preparing method described later, the core particles with a stable structure and a coating layer of uniform thickness can be formed without using sodium ions.

### Method of Preparing Positive Electrode Active Material

A method of preparing a positive electrode active material includes mixing a nickel-based composite hydroxide and a lithium raw material and performing a first heat treatment to obtain a first composite oxide; adding the first composite oxide to a solution of aluminium raw material and yttrium raw material mixed in an aqueous solvent, followed by mixing, and then drying; and dry-mixing the dried resulting materials and a tungsten raw material and performing a second heat treatment to obtain a positive electrode active material. The aforementioned positive electrode active material can be prepared by such a method, but the present disclosure is not limited thereto.

The nickel-based composite hydroxide is a precursor of core particles and may be in the form of secondary particles in which a plurality of primary particles are agglomerated. The nickel-based composite hydroxide may be represented by Chemical Formula 11.

[Chemical Formula 11] Niₓ₁₁M¹_{y11}M²_{z11}(OH)₂

In Chemical Formula 11, 0.3≤x11≤0.98, 0≤y11≤0.7, 0≤z11≤0.7; 0.9≤x11+y11+z11≤1.1; and M¹ and M² are each independently Al, B, Ba, Ca, Ce, Co, Cr, Fe, Mg, Mn, Mo, Nb, Si, Sr, Ti, V, Y, W, Zr, or a combination thereof. In more specific embodiments with Chemical Formula 11, 0.35≤x11≤0.95, 0.4≤x11≤0.9, 0.45≤x11≤0.85, 0.5≤x11≤0.8, or 0.69≤x11≤0.79; 0.1≤y11≤0.65, 0.1≤y11≤0.60, 0.1≤y11≤0.55, 0.15≤y11≤0.5, or 0.2≤y11≤0.4; and 0.01<z11≤0.5, 0.01<z11≤0.3, or 0.01<z11 ≤0.1.

In some embodiments, the nickel-based composite hydroxide may be a nickel-manganese-based composite hydroxide or may be a nickel-manganese-aluminium-based composite hydroxide. The nickel-based composite hydroxide may not include cobalt or may include a very small amount of cobalt, and may be, for example, a cobalt-free nickel-manganese-aluminium-based composite hydroxide. The nickel-based composite hydroxide may be prepared by coprecipitation methods.

A method of preparing a positive electrode active material according to some embodiments does include additional aluminium doping when preparing core particles but uses aluminium raw materials when preparing a precursor. Thus, a nickel-manganese-aluminium-based composite hydroxide in which aluminium is evenly dispersed within the structure may be used as a precursor. When using such a precursor, it is possible to prepare a positive electrode active material having a layered structure that is stably maintained during repeated charging and discharging even in the absence of cobalt. And, because aluminium by-products or aluminium aggregates are not formed, the capacity, efficiency characteristics, and cycle-life characteristics of the positive electrode active material can be improved.

In some embodiments, a nickel content in the nickel-based composite hydroxide may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal content of nickel-based composite hydroxide. If the nickel content satisfies these ranges, high capacity can be achieved and structural stability can be increased even if the cobalt content is reduced or eliminated.

A manganese content in the nickel-manganese-based composite hydroxide or nickel-manganese-aluminium-based composite hydroxide may be about 10 mol% to about 39 mol%, about 10 mol% to about 35 mol%, for example, about 10 mol% to about 30 mol%, about 10 mol% to about 29 mol%, about 15 mol% to about 39 mol%, about 20 mol% to about 39 mol%, or about 20 mol% to about 30mol%, based on 100 mol% of a total metal content of the nickel-manganese-based composite hydroxide or nickel-manganese-aluminium-based composite hydroxide. In addition, an aluminium content in the nickel-manganese-based composite hydroxide or nickel-manganese-aluminium-based composite hydroxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol% based on 100 mol% of a total metal content of the nickel-manganese-based composite hydroxide or nickel-manganese-aluminium-based composite hydroxide. If the manganese and aluminium contents of the composite hydroxide satisfy these ranges, high capacity may be realized while structural stability of the positive electrode active material may be increased, and production cost may be lowered.

According to some embodiments, a cobalt content in the nickel-manganese-based composite hydroxide or nickel-manganese-aluminium-based composite hydroxide may be less than or equal to about 0.01 mol%, less than or equal to about 0.005 mol%, or less than or equal to about 0.001 mol%, based on 100 mol% of a total metal content of the nickel-manganese-based composite hydroxide or nickel-manganese-aluminium-based composite hydroxide. Such a composite hydroxide may be economical as it avoids an increase in unit cost caused by cobalt, maximizes capacity, and improves structural stability.

The nickel-based composite hydroxide may be represented by Chemical Formula 12.

[Chemical Formula 12] Niₓ₁₂Mn_{y12}M¹_{z12}M²_{w12}(OH)₂

In Chemical Formula 12, 0.6≤x12≤0.8, 0.1≤y12≤0.39, 0.01<z12≤0.03, 0≤w12≤0.29, and 0.9≤x12+y12+z12+w12≤1.1; and M¹ and M² are each independently Al, B, Ba, Ca, Ce, Cr, Fe, Mg, Mo, Nb, Si, Sn, Sr, Ti, V, Y, W, Zr, or a combination thereof, and X is F, P, S, or a combination thereof. In more specific embodiments with Chemical Formula 12, 0.6≤x12≤0.79, 0.6≤x12≤0.78, 0.6≤x12≤0.75, 0.65≤x12≤0.8, or 0.7≤x12≤0.79; 0.1≤y12≤0.35, 0.1≤y12≤0.30, 0.1≤y12≤0.29, 0.15≤y12≤0.39, or 0.2≤y12≤0.3; 0.01<z12≤0.025, 0.01<z12≤0.02, or 0.01<z12≤0.019; and 0≤w12≤0.28, 0≤w12≤0.27, 0≤w12≤0.26, 0≤w12≤0.25, 0≤w12≤0.24, 0≤w12≤0.23, 0≤w12≤0.22, 0≤w12≤0.21, 0≤w12≤0.2, 0≤w12≤0.15, 0≤w12≤0.1, or 0≤w12≤0.09.

The nickel-based composite hydroxide may be represented by Chemical Formula 13.

[Chemical Formula 13] Niₓ₁₃Mn_{y13}Alz₁₃M¹_{w13}(OH)₂

In Chemical Formula 13, 0.6≤x13≤0.8, 0.1≤y13≤0.39, 0.01<z13≤0.03, 0≤w13≤0.29, and 0.9≤x13+y13+z13+w13≤1.1; and M¹ is B, Ba, Ca, Ce, Cr, Fe, Mg, Mo, Nb, Si, Sn, Sr, Ti, V, Y, W, Zr, or a combination thereof. In more specific embodiments with Chemical Formula 13, 0.6≤x13≤0.79, 0.6≤x13≤0.78, 0.6≤x13≤0.75, 0.65≤x13≤0.8, or 0.7≤x13≤0.79; 0.1≤y13≤0.35, 0.1≤y13≤0.30, 0.1≤y13≤0.29, 0.15≤y13≤0.39, or 0.2≤y13≤0.3; 0.01<z13≤0.025, 0.01<z13≤0.02, or 0.01<z13≤0.019; and 0≤w13≤0.28, 0≤w13≤0.27, 0≤w13≤0.26, 0≤w13≤0.25, 0≤w13≤0.24, 0≤w13≤0.23, 0≤w13≤0.22, 0≤w13≤0.21, 0≤w13≤0.2, 0≤w13≤0.15, 0≤w13≤0.1, or 0≤w13≤0.09.

The nickel-based composite hydroxide may be in the form of particles having an average particle diameter (D₅₀) of about 10 µm to about 18 µm, about 11 µm to about 16 µm, or about 12 µm to about 15 µm.

In some embodiments, the lithium raw material may include, for example, lithium hydroxide hydrate, anhydrous lithium hydroxide, lithium carbonate, lithium nitrate, lithium chloride, or a combination thereof.

The nickel-based composite hydroxide and lithium raw material may be mixed in a molar ratio of about 1:0.9 to about 1:1.8, for example, about 1:0.9 to about 1:1.5 or about 1:0.9 to about 1:1.2.

The first heat treatment may be performed in an oxygen atmosphere at a temperature range of, for example, about 750 °C to about 950 °C, or about 780 °C to about 900 °C, or about 810 °C to about 890 °C, and for about 2 hours to about 20 hours, for about 4 hours to about 12 hours, or about 8 hours to about 12 hours.

The first composite oxide may be obtained through a first heat treatment, and the first composite oxide may be a lithium nickel-based composite oxide, a lithium nickel-manganese-based composite oxide, or a lithium nickel-manganese-aluminium composite oxide. The obtained first composite oxide may include nickel in an amount of greater than or equal to about 60 mol%, for example, about 60 mol% to about 80 mol%, and may not include cobalt or may include cobalt in a very small amount of less than or equal to about 0.01 mol%. If such a first composite oxide is a cobalt-free lithium nickel-manganese-based composite oxide or a cobalt-free nickel-manganese-aluminium-based composite oxide, the oxide may have a significantly different residual lithium content on the particle surfaces and different various surface characteristics from oxides with other compositions, for example, nickel-based oxide such as a lithium nickel-cobalt-manganese-based composite oxide or a lithium nickel-cobalt-aluminium-based composite oxide, and the like. In addition, compared with conventional coating methods, it is possible to form a satisfactory coating layer in a uniform film form. According to some embodiments, on the surface of the lithium nickel-manganese-based composite oxide having a very small cobalt content and a nickel content of greater than or equal to about 60 mol% (or the lithium nickel-manganese-aluminium-based composite oxide), a very thin and uniform coating layer may be formed, thereby improving high-voltage and high-temperature characteristics.

The coating layer containing aluminium and yttrium as active components may be formed in a method of mixing aluminium and yttrium raw materials in an aqueous solvent to prepare a solution, adding the first composite oxide to the solution, and drying the mixture. This method may be referred to as wet coating, through which the coating layer containing aluminium and yttrium as active components may be formed.

The aqueous solvent used to prepare the solution may be distilled water, an alcohol-based solvent, or a combination thereof. The aluminium raw material may be, for example, aluminium nitrate, aluminium sulfate, aluminium carbonate, aluminium hydroxide, or a combination thereof, and particularly, aluminium sulfate. The yttrium raw material may be, for example, yttrium nitrate, yttrium sulfate, yttrium carbonate, yttrium hydroxide, or a combination thereof. In such cases, an advantageous coating layer may be formed with a uniform thickness on the surface of lithium nickel-based composite oxide particles, which are the first composite oxide.

The aluminium raw material is a raw material for forming a coating layer, and an aluminium content of the aluminium raw material may be about 0.1 mol% to about 2.5 mol%, for example, about 0.2 mol% to about 2.3 mol%, about 0.3 mol% to about 2.0 mol%, about 0.5 mol% to about 2.0 mol%, about 0.8 mol% to about 2.0 mol%, or about 0.8 mol% to about 1.3 mol%, based on about 100 mol% of a total metal content a final positive electrode active material excluding lithium. Similarly, the yttrium raw material is a raw material for forming a coating layer, and a yttrium content of the yttrium raw material may be about 0.05 mol% to about 1.5 mol%, for example, about 0.1 mol% to about 1.5 mol%, about 0.1 mol% to about 1.3 mol%, about 0.1 mol% to about 1.2 mol%, about 0.1 mol% to about 1.0 mol%, or about 0.1 mol% to about 0.6 mol%, based on about 100 mol% of a total metal content of the final positive electrode active material excluding lithium. The contents of the coating raw materials are respectively designed to be within the ranges to form a coating layer with a uniform and thin thickness of tens or hundreds of nanometers. Such a configuration may reduce gas generation of a rechargeable lithium battery under high-voltage or high-temperature driving conditions and improve high-capacity and long cycle-life characteristics.

The solution of the aluminium and yttrium raw materials in the aqueous solvent may have pH of about 1.5 to about 3.5, for example, about 2.0 to about 3.4, about 2.5 to about 3.3, about 2.7 to about 3.3, or about 2.9 to about 3.2. Adding and mixing of the first composite oxide with the solution of the aluminium and yttrium raw materials may be performed for about 5 minutes to about 80 minutes, or about 5 minutes to about 60 minutes, or about 5 minutes to about 40 minutes, and the mixing may be performed by stirring. After the stirring, pH of the mixed solution may be about 4.5 to about 8.5, for example, about 5.0 to about 8.0, about 5.5 to about 7.5, or about 6.0 to about 7.0. If such conditions are satisfied, an advantageous coating layer with a uniform thickness may be formed.

The drying after the mixing may be a process of removing the solvent and may be performed, for example, at about 40 °C to about 300 °C, about 100 °C to about 220 °C, or about 150 °C to about 200 °C.

Subsequently, a resulting material from the drying is dry-mixed with a tungsten raw material. Then a second heat treatment is performed. Through the second heat treatment, a coating layer including aluminium, yttrium, and tungsten as active components is formed on the positive electrode active material, thereby providing a positive electrode active material according to some embodiments.

The tungsten raw material for forming a coating layer including tungsten as an active component may have a tungsten content of about 0.01 mol% to about 1.5 mol%, for example, about 0.02 mol% to about 1.3 mol%, about 0.03 mol% to about 1.2 mol%, about 0.04 mol% to about 1.0 mol%, about 0.05 mol% to about 0.3 mol%, or about 0.1 mol% to about 0.2 mol%, based on about 100 mol% of the total metal content of the final positive electrode active material excluding lithium. If the tungsten content of the tungsten raw material is to be within these ranges, a coating layer with a uniform and thin thickness of tens to hundreds of nanometers may be formed, gas generation of a rechargeable lithium battery may be reduced under the high-voltage or high-temperature conditions, and the battery may have good high-capacity and long cycle-life characteristics.

In some embodiments, each addition amount of the yttrium raw material and the tungsten raw material in the manufacturing process may be designed to have a molar ratio (C_{W}/C_{Y}) of a tungsten content (C_{W}) to an yttrium content (C_{Y}) of less than or equal to about 1.0 in the coating layer, for example, about 0.01 to about 1.0, about 0.05 to about 1.0, about 0.1 to about 1.0, or about 0.25 to about 1.0. If these ranges are satisfied, gas generation in a rechargeable lithium battery under the high-voltage or high-temperature driving conditions may be reduced, and the high-capacity and long cycle-life characteristics of the battery may be improved.

Each addition amount of the aluminium raw material and the tungsten raw material in the manufacturing process may be designed to have a molar ratio (C_{W}/C_{Al}) of a tungsten content (C_{W}) to an aluminium content (C_{Al}) of less than or equal to about 0.5 in the coating layer, for example, about 0.01 to about 0.5, about 0.03 to about 0.5, or about 0.05 to about 0.5. If these ranges are satisfied, a satisfactory coating layer may be formed while securing structural stability without deteriorating capacity or increasing resistance. Further, a side reaction of the positive electrode active material with an electrolyte may be effectively suppressed and gas generation under the high-voltage and high-temperature conditions may be reduced.

The tungsten raw material may include, for example, tungsten oxide, tungsten sulfide, sodium tungstate, ammonium tungstate, or a combination thereof. When using such materials, a coating layer having a uniform thickness and containing tungsten may be effectively formed on the surface of the lithium nickel-based composite oxide particles (i.e., the core particles).

A positive electrode active material is obtained by the second heat treatment, which is a process of forming the coating layer including aluminium, yttrium, and tungsten as active components on the surface of the lithium nickel-based composite oxide particles (i.e., the core particles). The second heat treatment may be performed under an oxygen atmosphere at about 700 °C to about 900 °C, for example, about 730 °C to about 870 °C, about 750 °C to about 850 °C, or about 770 °C to about 830 °C. The second heat treatment may be performed for about 1 hour to about 18 hours, about 2 hours to about 15 hours, about 3 hours to about 10 hours, or about 5 hours to about 9 hours. The second heat treatment temperature may be lower than the first heat treatment temperature, and the second heat treatment time may be equal or shorter than first heat treatment time. If the second heat treatment is performed with such conditions, a coating layer including aluminium, yttrium, and tungsten as active components may be effectively obtained.

### Positive Electrode

In some embodiments, the positive electrode includes a current collector and a positive electrode active material layer formed on the current collector. The positive electrode active material layer includes a positive electrode active material and may further include a binder and/or a conductive material.

The positive electrode active material may be a compound (lithiated intercalation compound) capable of intercalating and deintercallating lithium, and, specifically, is the positive electrode active materials as described above. Additionally, the positive electrode active material layer may also include other types of positive electrode active materials in addition to the positive electrode active materials as described above.

According to some embodiments, a loading level of the positive electrode may be about 10 mg/cm² to about 40 mg/cm², for example, about 10 mg/cm² to about 30 about mg/cm², or about 10 mg/cm² to about 20 mg/cm². Additionally, a density of the positive electrode in the final compressed positive electrode may be about 3.3 g/cc to about 3.7 g/cc, for example, about 3.3 g/cc to about 3.6 g/cc or about 3.4 g/cc to about 3.58 g/cc. When applying the positive electrode active material according to some embodiments, it may be advantageous to implement such loading levels and positive electrode densities in these above range in order to provide a high-capacity, high-energy-density rechargeable lithium battery.

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But the present disclosure is not limited to these examples.

The conductive material is included to provide electrode conductivity and any electrically conductive material may be used as a conductive material provided that it does not cause a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

The current collector may include Al, but the present disclosure is not limited thereto.

As an example, the positive electrode may further include an additive that can function as a sacrificial positive electrode.

The positive electrode active material may be included in an amount of about 90 wt% to about 99.5 wt% based on 100 wt% of the positive electrode active material layer, and the binder and the conductive material may be included in an amount of about 0.5 wt% to about 5 wt%, respectively, based on 100 wt% of the positive electrode active material layer.

### Rechargeable Lithium Battery

Some embodiments provide a rechargeable lithium battery including the aforementioned positive electrode, a negative electrode, and an electrolyte. That is, the rechargeable lithium battery may include a positive electrode, a negative electrode, a separator positioned between the positive electrode and the negative electrode, and an electrolyte solution.

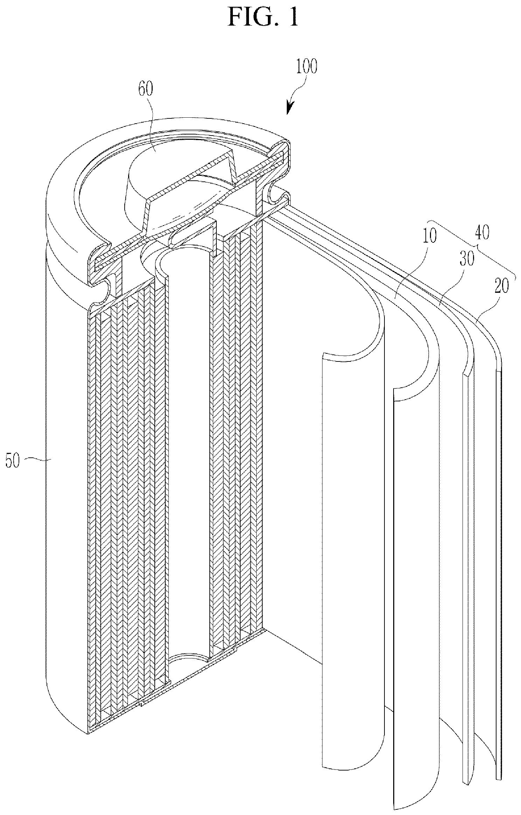

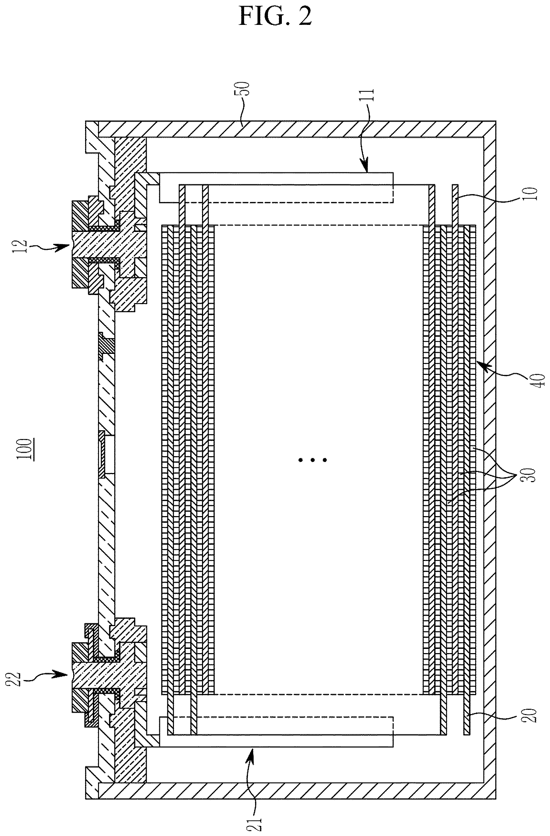

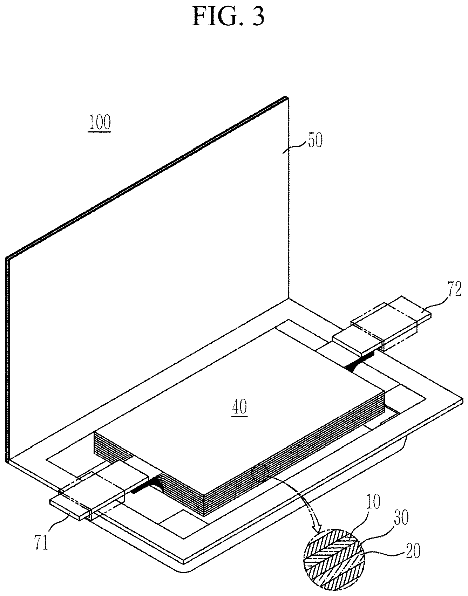

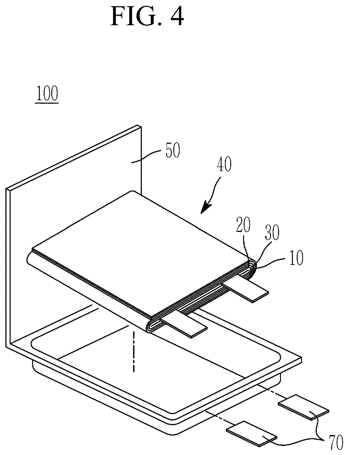

The rechargeable lithium battery may be classified into cylindrical, prismatic, pouch, coin, etc. depending on its shape. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, as shown in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes electrode tabs 70, that is, a positive electrode tab 71 and a negative electrode tab 72 serving as an electrical path for inducing the current formed in the electrode assembly 40 to outside of the battery.

A rechargeable lithium battery according to some embodiments may be rechargeable at a high voltage or may be suitable for being driven at a high voltage. For example, a charging voltage for the rechargeable lithium battery may be greater than or equal to about 4.45 V, about 4.45 V to about 4.7 V, about 4.45 V to about 4.6 V, or about 4.45 V to about 4.55 V. By using the positive electrode active material according to some embodiments, the rechargeable lithium battery can significantly reduce an amount of gas generation even when charged at high voltage and can achieve high capacity and long cycle-life characteristics.

### Negative Electrode

The negative electrode may include a negative electrode current collector, and a negative electrode active material layer on the negative electrode current collector. The negative electrode active material layer may include a negative electrode active material, and may further include a binder, a conductive material, or a combination thereof.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy, or a combination of thereof. In the Si-Q alloy, Q is an element selected from an alkali metal, an alkaline-earth metal, a Group 13 element, a Group 14 element (excluding Si), a Group 15 element, a Group 16 element, a transition metal, a rare earth element, and a combination thereof, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in a form of silicon particles and amorphous carbon coated on the surfaces of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles and the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon, silicon particles, and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a silicon content may be about 10 wt% to about 50 wt% and a content of amorphous carbon may be about 50 wt% to about 90 wt%, based on 100 wt% of the silicon-carbon composite. In addition, when the composite includes silicon, amorphous carbon, and crystalline carbon, a silicon content may be about 10 wt% to about 50 wt%, a content of crystalline carbon may be about 10 wt% to about 70 wt%, and a content of amorphous carbon may be about 20 wt% to about 40 wt%, based on 100 wt% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may be present as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67. As noted above, when a definition is not otherwise provided, an average particle diameter (D₅₀) indicates a particle where a cumulative volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed, the mixing ratio may be a weight ratio of about 1:99 to about 90:10.

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material may be used as a conductive material provided that it does not cause a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone or as a mixture of two or more.

When using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within this range, the electrolyte solution has appropriate ionic conductivity and viscosity, and, thus, excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON^{®}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked. A thickness of the coating layer may be about 0.5 µm to about 20 µm, for example, about 1 µm to about 10 µm, or about 1 µm to about 5 µm.

The rechargeable lithium battery according to some embodiments may be used in automobiles, mobile phones, and/or various types of electrical devices. But the present disclosure is not limited in this regard.

Examples and comparative examples of the present disclosure are described below. However, the following are only examples and the present disclosure is not limited to these examples.

### Example 1

### 1. Preparation of Positive Electrode Active Material

Ni_{0.75}Mn_{0 24}Al_{0.01}(OH)₂ and LiOH were mixed at a molar ratio of 1:1 and subjected to first heat treatment at 850 °C for 8 hours in an oxygen atmosphere to obtain a first composite oxide having a composition of LiNi_{0.75}Mn_{0.24}Al_{0.01}O₂ and in a form of secondary particles having an average particle diameter (D₅₀) of about 14 µm.

After preparing a solution in which an aluminium raw material and an yttrium raw material were mixed by mixing aluminium sulfate and yttrium nitrate in a distilled water solvent, the first composite oxide was added to the solution and then stirred for 1 hour. An aluminium content in the aluminium sulfate was designed to be 1.0 mol% based on 100 mol% of a total metal content of the final positive electrode active material excluding lithium, and a yttrium content of the yttrium nitrate was designed to be 0.2 mol% based on 100 mol% of a total metal content of the final positive electrode active material excluding lithium. After removing the solvent from the mixed solution, the residue was dried at 190 °C.

Subsequently, the resulting dried material was dry-mixed with tungsten oxide (WO₃), which is a tungsten raw material, without a solvent and then secondarily heat-treated at 825 °C for 8 hours to thereby obtain the positive electrode active material. A tungsten content of the tungsten oxide was designed to be 0.05 mol% based on 100 mol% of the total metal content of the final positive electrode active material excluding lithium.

### 2. Manufacturing of Rechargeable Lithium Battery Cell

96 wt% of the positive electrode active material, 2.0 wt% of a polyvinylidene fluoride binder, and 2.0 wt% of a carbon nanotube conductive material were mixed to prepare positive electrode slurry. The slurry was coated on an aluminium foil current collector and then dried and compressed to make a positive electrode. The loading level of the positive electrode was 10 mg/cm² and the density of the final compressed positive electrode was about 3.5 g/cc.

A negative electrode slurry was prepared by mixing 97.5 wt% of graphite negative electrode active material, 1.5 wt% of carboxymethyl cellulose, and 1 wt% of styrene butadiene rubber in a water solvent. The negative electrode slurry was coated on a copper foil current collector, dried, and pressed to thereby make a negative electrode.

The positive and negative electrodes were used with a polytetrafluoroethylene separator and an electrolyte solution prepared by dissolving 1 M LiPF₆ in a mixed solvent of ethylene carbonate and dimethyl carbonate in a volume ratio of 3:7 to make a rechargeable lithium battery cell according to a common method.

### Example 2

A positive electrode active material and a rechargeable lithium battery cell were made in the same manner as in Example 1 except that the positive electrode active material was prepared by designing the tungsten content of the tungsten oxide to be 0.1 mol% based on 100 mol% of the total metal content of the final positive electrode active material excluding lithium.

### Example 3

A positive electrode active material and a rechargeable lithium battery cell were made in the same manner as in Example 1 except that the positive electrode active material was prepare by designing the tungsten content of the tungsten oxide to be 0.2 mol% based on 100 mol% of the total metal content of the final positive electrode active material excluding lithium.

### Example 4

A positive electrode active material and a rechargeable lithium battery cell were made in the same manner as in Example 1 except that the positive electrode active material was prepared by designing the aluminium content of the aluminium sulfate to be 2.0 mol% based on 100 mol% of the total metal content of the final positive electrode active material excluding lithium, the yttrium content of the yttrium nitrate to be 1.0 mol% based on 100 mol% of the total metal content of the final positive electrode active material excluding lithium, and the tungsten content of the tungsten oxide to be 1.0 mol% based on 100 mol% of the total metal content of the final positive electrode active material excluding lithium.

### Comparative Example 1

A positive electrode active material and a rechargeable lithium battery cell were made in the same manner as in Example 1 except that a composite oxide of LiNi_{0.75}Mn_{0 24}Al_{0.01}O₂ was used by itself as the positive electrode active material without an aluminium and yttrium coating process and without a tungsten coating process.

### Comparative Example 2

A positive electrode active material and a rechargeable lithium battery cell were made in the same manner as in Example 1 except that the positive electrode active material was prepared by adding the aluminium sulfate and the first composite oxide without the yttrium nitrate to a distilled water solvent an the second heat treatment was performed at 825 °C for 8 hours for the aluminium coating alone without the tungsten coating process.

### Comparative Example 3

A positive electrode active material and a rechargeable lithium battery cell were made in the same manner as in Example 1 except that the positive electrode active material was prepared by adding the yttrium nitrate and the first composite oxide without the aluminium sulfate to a distilled water solvent and the second heat treatment was performed at 825 °C for 8 hours for the yttrium coating alone without the tungsten coating process.

### Comparative Example 4

A positive electrode active material and a rechargeable lithium battery cell were made in the same manner as in Example 1 except that the positive electrode active material was prepared by adding the yttrium nitrate and the first composite oxide without the aluminium sulfate to a distilled water solvent to perform yttrium coating alone, wherein the yttrium content of the yttrium nitrate was designed to be 0.5 mol% based on 100 mol% of the total metal content the final positive electrode active material excluding lithium, but without performing the tungsten coating process.

### Comparative Example 5

A positive electrode active material and a rechargeable lithium battery cell were made in the same manner as in Example 1 except that the positive electrode active material was prepared by designing the yttrium content of the yttrium nitrate to be 0.1 mol% based on 100 mol% of a total metal content of the final positive electrode active material excluding lithium and performing the second heat treatment at 825 °C for 8 hours, but not performing the tungsten coating.

### Comparative Example 6

A positive electrode active material and a rechargeable lithium battery cell were made in the same manner as in Example 1 except that the positive electrode active material was prepared by drying the mixed solution of the aluminium sulfate and the yttrium nitrate in a distilled water solvent and performing the second heat treatment at 825 °C for 8 hours.

### Comparative Example 7

A positive electrode active material and a rechargeable lithium battery cell were made in the same manner as in Example 1 except that the positive electrode active material was prepared by designing the yttrium content of the yttrium nitrate to be 0.5 mol% based on 100 mol% of a total metal content of the positive electrode active material excluding lithium and performing the second heat treatment at 825 °C for 8 hours, but not performing the tungsten coating.

The coating designs of the positive electrode active materials of Examples 1 to 4 and Comparative Examples 1 to 7 are shown in Table 1.

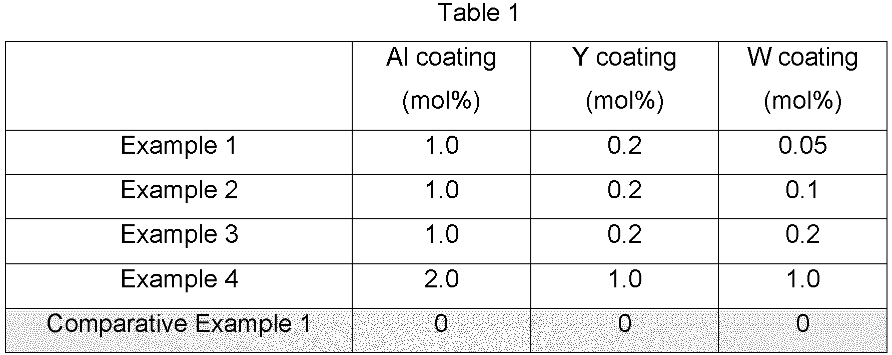

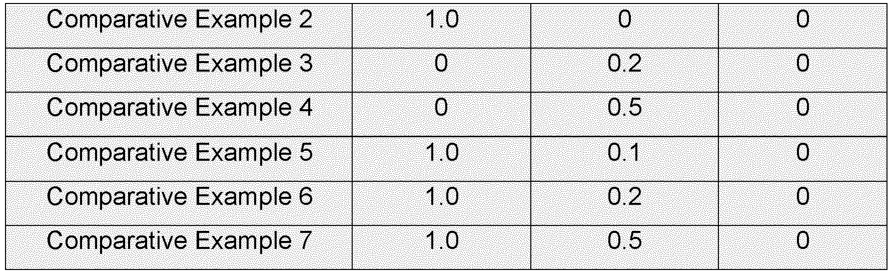

### Evaluation Example 1: SEM Analysis

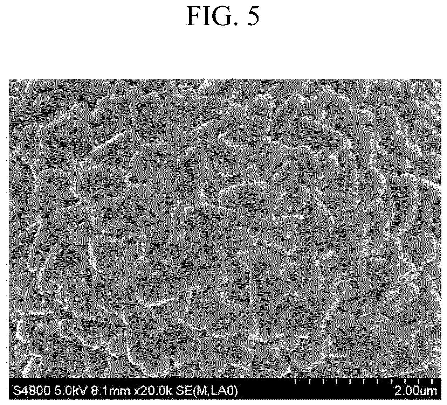

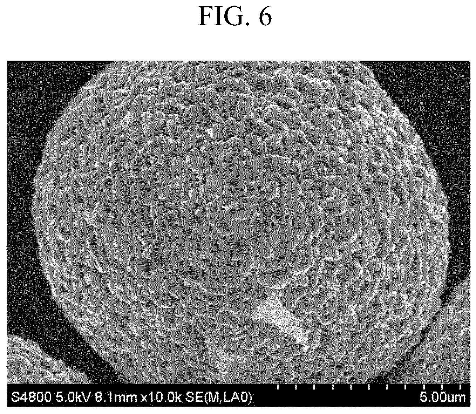

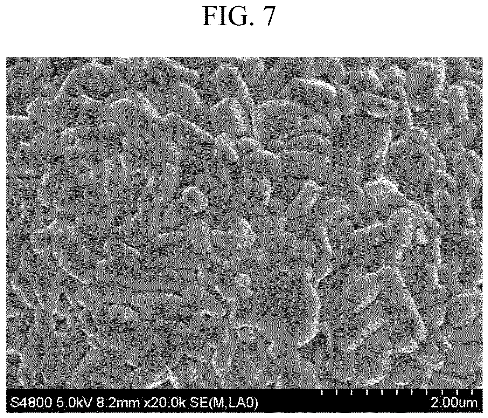

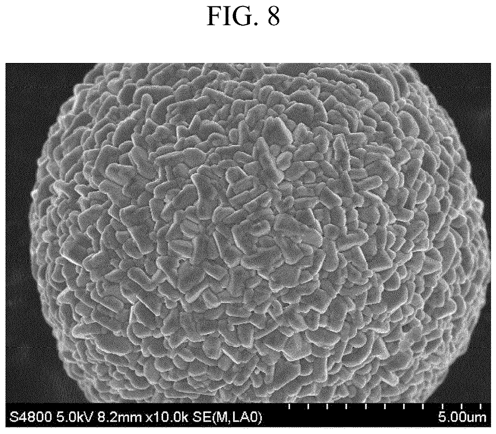

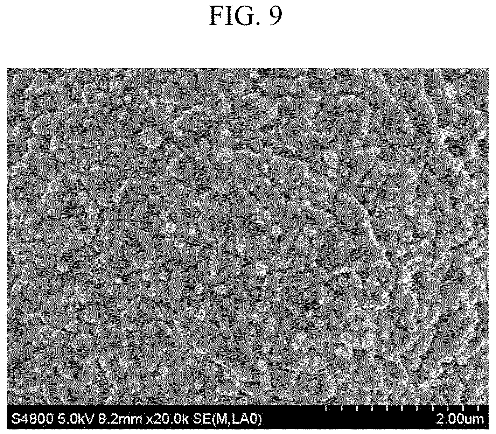

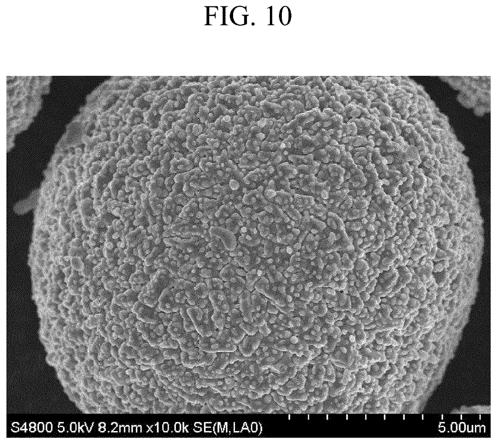

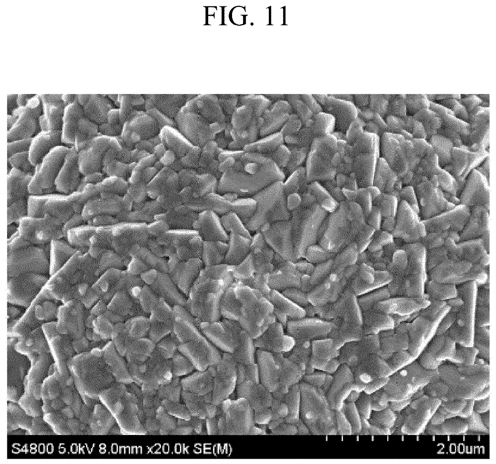

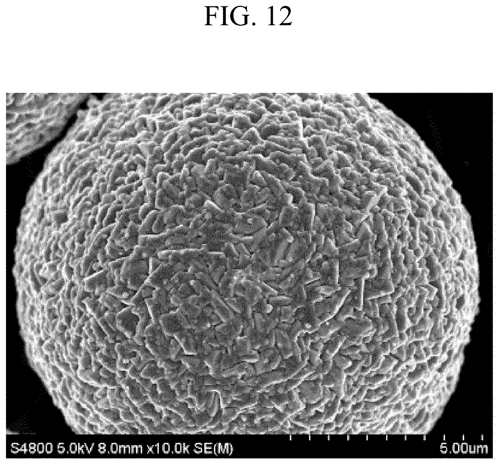

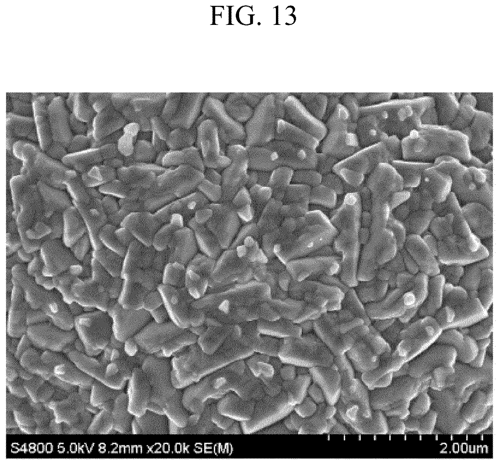

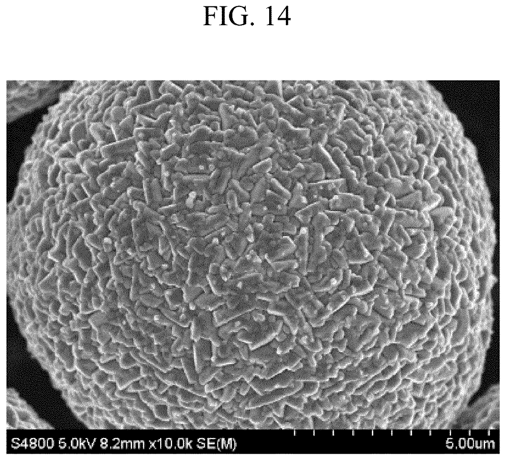

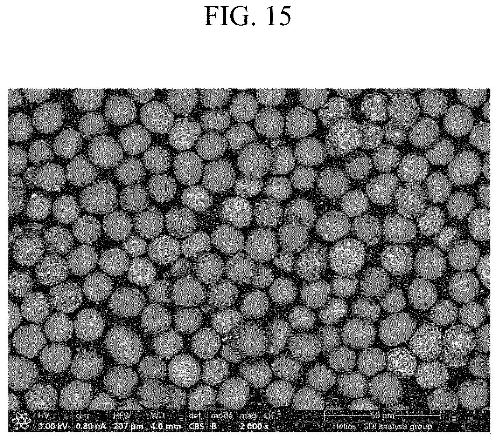

A SEM was used to take images of the positive electrode active materials according to Examples 2, 3 and 4 and Comparative Examples 1, 2, and 6. FIGS. 5 and 6 are SEM images of the particle surfaces of the positive electrode active material of Comparative Example 1 having no coating, FIGS. 7 and 8 are SEM images of the particle surfaces of the positive electrode active material of Comparative Example 2 having aluminium coating alone, and FIGS. 9 and 10 are SEM images of the surfaces of the positive electrode active material particles of Comparative Example 6 having aluminium and yttrium coating alone. FIGS. 11 and 12 are SEM images of the surfaces of the positive electrode active material particles of Example 2, and FIGS. 13 and 14 are SEM images of the surfaces of the positive electrode active material particles of Example 3. FIG. 15 is an SEM image taken in BSE mode of the positive electrode active material prepared in Example 4.

Referring to FIGS. 5 to 14, the positive electrode active materials of Examples 2 and 3 and Comparative Examples 1, 2, and 6 exhibited different surface phases. Referring to FIG. 15, in the SEM image taken in a BSE mode, the higher atomic number of the metal the brighter the metal in the image, and, accordingly, brightness difference appears in the order of W > Y > Mn > Ni > Al. The positive electrode active material particles according to Example 4 exhibited variously mixed different surface coatings. When the plurality of positive electrode active material particles with different surface coatings were enlarged to evaluate SEM-EDS (described later), the positive electrode active material largely included two types of positive electrode active materials. Herein, the SEM-EDS was analyzed using Philips' FEI Titan 80-300 at an acceleration voltage of 15 kV. The 2 types of positive electrode active materials included one positive electrode active material prominently coated with yttrium in the coating layer (positive electrode active material 1) and the other positive electrode active material prominently coated with tungsten in the coating layer (positive electrode active material 2).

### Evaluation Example 2: Surface Analysis of Positive Electrode Active Material

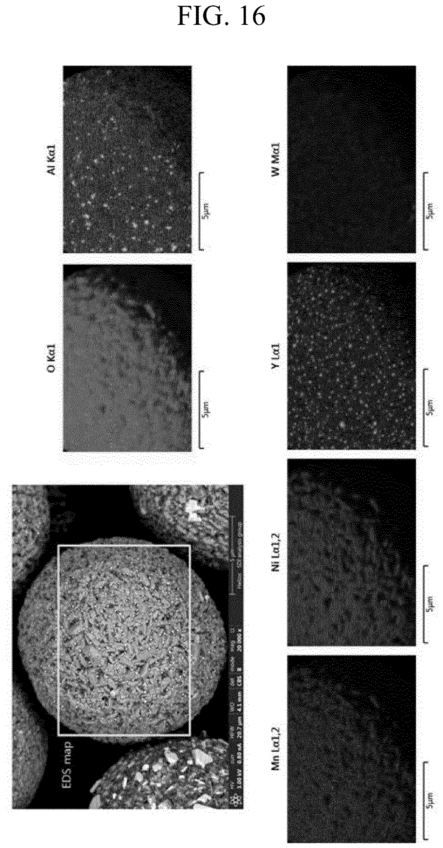

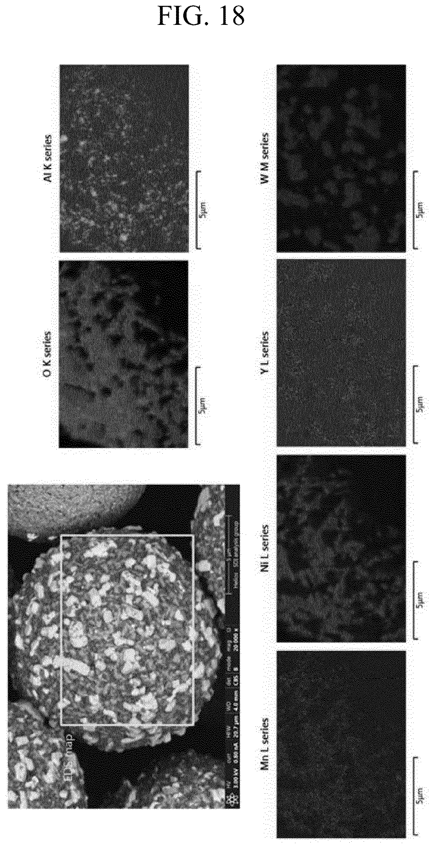

In order to analyze the surface of the positive electrode active material, the positive electrode active material 1 and the positive electrode active material 2 as discussed in Evaluation Example 1 were subjected to SEM-EDS analysis on the surfaces, and the results are respectively shown in FIGS. 16 and 18. Herein, the SEM-EDS was analyzed using Philips' FEI Titan 80-300 at an acceleration voltage of 15 kV.

Referring to FIGS. 16 and 18, the positive electrode active material according to Example 4 had a coating layer containing Al, Y, and W on the surfaces of the positive electrode active materials 1 and 2.

In addition, when the elemental analysis results of aluminium (Al), yttrium (Y), tungsten (W), and oxygen (O) at the same point on the positive electrode active material surface were compared, aluminium, yttrium, and tungsten were present in an oxide form in the coating layer.

### Evaluation Example 3: Cross-sectional Analysis of Positive Electrode Active Material

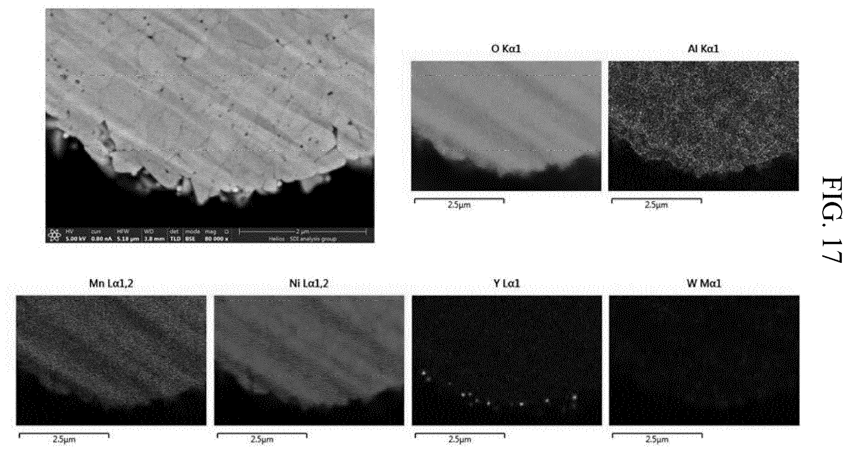

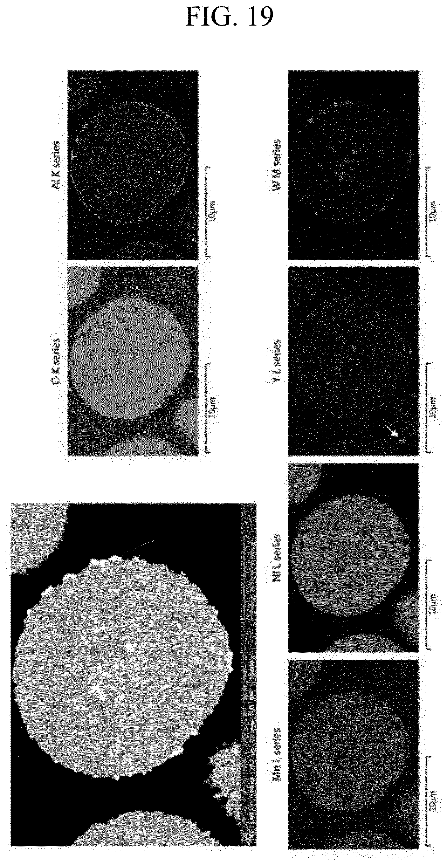

In order to analyze the surface of the positive electrode active material, the positive electrode active material 1 and positive electrode active material 2 as discussed in Evaluation Example 1 were subjected to SEM-EDS analysis on their cross-sections and the results are respectively shown in FIGS. 17 and 19. Herein, the SEM-EDS was analyzed using Philips' FEI Titan 80-300 at an acceleration voltage of 15 kV.

Referring to FIGS. 17 and 19, the coating layer of the positive electrode active material according to Example 4 was formed within a range of 30 nm to 1 µm, and aluminium was present in the form of a continuous film or in the form of an island in the coating layer of the positive electrode active material.

On the other hand, the positive electrode active material 1, as shown in FIG. 17, yttrium existed in an island in the coating layer, but the positive electrode active material 2, as shown in FIG. 19, tungsten existed in an island in the coating layer. Accordingly, in the coating layer of the positive electrode active material of Example 4, either one of yttrium and tungsten existed in the form of an island. Also, in the coating layer of the positive electrode active material Example 4, the island form had a thickness of 10 nm to 500 nm.

### Evaluation Example 4: Analysis of Grain Boundaries and Internal Pores of Core Particles

Referring to the aluminium (Al) component analysis result in FIG. 17, aluminium was confirmed to exist in a grain boundary coating portion on the surfaces of the primary particles inside the secondary particles, the core particles of the positive electrode active material. Referring to the tungsten (W) component analysis result in FIG. 19, tungsten existed in internal pores of the core particles of the positive electrode active material.

### Evaluation Example 5: Evaluation of Initial Charge/discharge Capacity and Efficiency

The rechargeable lithium battery cells of Examples 1 to 3 and Comparative Examples 1 to 7 were charged to an upper limit voltage of 4.45 V at a constant current of 0.2 C and to 0.05 C at the constant voltage and then discharged to a cut-off voltage of 3.0 V at 0.2 C at 25 °C for initial charge and discharge. Table 2 shows initial charge capacity, initial discharge capacity, and a ratio of the initial discharge capacity to the initial charge capacity as efficiency.

### Evaluation Example 6: High-temperature Cycle-life Characteristics

After the initial charging and discharging of Evaluation Example 5, the cells were charged 50 time or more within a voltage range of 3.0 V to 4.45 V at 1.0 C and discharged at 1.0 C at 45 °C to calculate a ratio of 50th cycle discharge capacity to the initial discharge capacity, with the results being shown in Table 2.

### Evaluation Example 7: Evaluation of Amount of Gas Generation

The cells of Examples 1 to 4 and Comparative Examples 1 to 7 were initially charged at 4.45 V as in Evaluation Example 5 and stored at 90 °C for 4 hours to measure an amount of gas generation, and the results are shown in Table 2.

**Table 2**

| | Charge capacity (mAh/g) | Discharge capacity (mAh/g) | Initial charging and discharging efficiency (%) | 50th capacity retention rate (%) | Amount of gas generation (mL/g) |
|---|---|---|---|---|---|
| Example 1 | 228.5 | 194.0 | 84.9 | 95.4 | 8.61 |
| Example 2 | 228.1 | 193.2 | 84.7 | 95.6 | 8.40 |
| Example 3 | 227.3 | 191.2 | 84.1 | 95.3 | 7.80 |
| Example 4 | 225.1 | 188.6 | 83.8 | 95.4 | 7.50 |
| Comparative Example 1 | 229.5 | 194.4 | 84.7 | 91.5 | 14.2 |
| Comparative Example 2 | 229.6 | 195.0 | 84.9 | 93.3 | 13.0 |
| Comparative Example 3 | 229.7 | 194.1 | 84.5 | 92.5 | 13.9 |
| Comparative Example 4 | 228.8 | 194.0 | 84.8 | 93.4 | 13.5 |
| Comparative Example 5 | 229.3 | 194.6 | 84.9 | 93.4 | 12.3 |
| Comparative Example 6 | 228.4 | 194.4 | 85.1 | 95.1 | 9.99 |
| Comparative Example 7 | 225.9 | 192.5 | 85.2 | 95.5 | 8.78 |

Referring to Table 2, as compared with the cells of the comparative examples, the rechargeable lithium battery cells of Examples 1 to 4 realized equivalent charge and discharge capacity and efficiency characteristics. Examples 1 to 4 also exhibited at least one excellent effect of improving high temperature cycle-life characteristics and reducing gas generation under high-voltage and high-temperature conditions.

On the other hand, Comparative Example 1, which had no coating, exhibited inferior high-temperature cycle-life characteristics and had the greatest amount of gas generation. Comparative Example 2, which had only an aluminium coating, and Comparative Examples 3 and 4, which had only a yttrium coating, exhibited a greater amount of gas generation under high-voltage and high-temperature conditions than the Examples.

In addition, in the case of Comparative Examples 5 to 7, which had aluminium and yttrium coating but not tungsten coating, the high-temperature cycle-life characteristics were lower or the gas generation was greater.

While this disclosure has been described in connection with what is presently considered to be practical example embodiments, it is to be understood that the disclosure is not limited to the disclosed embodiments. On the contrary, it covers various modifications and equivalent arrangements.

**<Description of Symbols>**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material comprising
core particles including a lithium nickel-based composite oxide; and
a coating layer provided on the surfaces of the core particles, the coating layer including aluminium, yttrium, and tungsten.

2. The positive electrode active material as claimed in claim 1, wherein the core particles are a lithium nickel-manganese-aluminium-based composite oxide.

3. The positive electrode active material as claimed in claim 1 or claim 2, wherein:
(i) a nickel content of the positive electrode active material is about 60 mol% to about 80 mol% based on 100 mol% of a total metal content of the positive electrode active material excluding lithium; and/or
(ii) an aluminium content of the coating layer is about 0.1 mol% to about 2.5 mol%, an yttrium content of the coating layer is about 0.05 mol% to about 1.5 mol%, and a tungsten content of the coating layer is about 0.01 mol% to about 1.5 mol% based on 100 mol% of a total metal content of the positive electrode active material excluding lithium.

4. The positive electrode active material as claimed in any one of claims 1 to 3, wherein:
(i) a molar ratio (C_{W}/C_{Y}) of a tungsten content (C_{W}) to an yttrium content (C_{Y}) of the coating layer is about 0.01 to about 1.0; and/or
(ii) a molar ratio (C_{W}/C_{Al}) of a tungsten content (C_{W}) to an aluminium content (C_{Al}) of the coating layer is about 0.01 to about 0.5.

5. The positive electrode active material as claimed in any one of claims 1 to 4, wherein the coating layer has a thickness of about 30 nm to about 1 µm.

6. The positive electrode active material as claimed in any one of claims 1 to 5, wherein:
(i) the aluminium, yttrium, and tungsten are mixed in the coating layer; and/or
(ii) at least one of the aluminium, yttrium, and tungsten are present in an oxide form in the coating layer; and/or
(iii) the coating layer includes aluminium oxide, yttrium oxide, and tungsten oxide.

7. The positive electrode active material as claimed in any one of claims 1 to 6, wherein aluminium is present in the form of a continuous film or an island in the coating layer.

8. The positive electrode active material as claimed in any one of claims 1 to 6, wherein at least one of the aluminium, yttrium, and tungsten is present as an island in the coating layer.

9. The positive electrode active material as claimed in any one of claims 1 to 8, wherein at least one of the yttrium and tungsten is present as an island in the coating layer.

10. The positive electrode active material as claimed in claim 8 or claim 9, wherein the island has a thickness of about 10 nm to about 500 nm.

11. The positive electrode active material as claimed in any one of claims 1 to 10, wherein:
(i) tungsten is provided in internal pores of the core particles of the positive electrode active material; and/or
(ii) the core particles are secondary particles formed by agglomerating a plurality of primary particles, and
wherein the positive electrode active material further includes a grain boundary coating portion located on the surfaces of primary particles inside the secondary particles and including aluminium; and/or
(iii) a cobalt content of the positive electrode active material is less than or equal to about 0.01 mol% based on 100 mol% of a total metal content of the positive electrode active material excluding lithium.

12. A method of preparing a positive electrode active material, the method comprising:
mixing a nickel-based composite hydroxide and a lithium raw material;
performing a first heat treatment on the mixture to obtain a first composite oxide;
adding the first composite oxide to a solution of aluminium raw material and yttrium raw material in an aqueous solvent, mixing, and then drying;
dry-mixing the dried resulting materials and a tungsten raw material; and
performing a second heat treatment to obtain the positive electrode active material.

13. The method as claimed in claim 12, wherein the first heat treatment is performed at about 750 °C to about 950 °C, the drying is performed at about 40 °C to about 300 °C, and the second heat treatment is performed at about 700°C to about 900 °C.

14. A positive electrode comprising
a current collector, and
a positive electrode active material layer on the current collector,
wherein the positive electrode active material layer includes the positive electrode active material as claimed in any one of claims 1 to 11.

15. A rechargeable lithium battery comprising
the positive electrode as claimed in claim 14,
a negative electrode, and
an electrolyte.
